# EUROPEAN PATENT APPLICATION

(11) **EP 0 990 506 A1**
(43) Date of publication of application: **05.04.2000**
(21) Application number: 98650064.3
(22) Date of filing: 29.09.1998
(51) Int. Cl.: B29C 57/00, B29C 63/34, G01M 3/28

(54) **Production of lined pipes**

(71) Applicant: O'Connell, Michael, Kinsale, County Cork (IE); Sheeran, James, Monkstown, Cork (IE)
(72) Inventor: O'Connell, Michael, Kinsale, County Cork (IE); Sheeran, James, Monkstown, Cork (IE)
(74) Representative: Weldon, Michael James

(57) **Abstract**

A lined pipe is produced with automatic and simultaneous flaring of both ends of a liner. A heated die (80) presses the liner at each end to an intermediate stage. A final flaring die (85) completes the flare. This die remains in position and acts as a conduit for injection of fluid under pressure into the liner at one end and control of pressure at the other end so that a pressure test is performed. There is an excellent seal with the inner surface of the liner to perform the pressure test because the dies are used *in-situ*. Production efficiency is improved because both ends are formed simultaneously and the pressure test is performed without the need to either move the pipe assembly to a different workstation or even to move a head within an existing workstation.

## Description

The invention relates to production of pipes which are of a high strength material such as steel and which have a lining to protect from chemical attack. Such a lining is, for example, of PTFE material.

Such a process is described in British Patent Specification No. GB2244781 (Fordbrook). This specification describes a method in which the steel pipe is honed on the inside and subsequently brushed to prepare the inner surface. A liner is then pulled through so that it has an interference fit within the pipe. There is then a staged flaring of excess liner protruding from the ends using two dies. This method is very effective and produces lined pipes to a very high quality. However, there is a need to improve the production efficiency in a manner whereby the same quality standards are met.

According to the invention, there is provided a method of lining a metal pipe comprising the steps of:-
inserting a liner into a pipe until excess liner protrudes from at least one end of the pipe; and
forming a flare in the excess liner by pressing a flaring die against the liner,
   characterised in that,
the die comprises a fluid conduit, and the pipe is tested after flaring of the liner by injecting fluid under pressure into the liner via the conduit.

Performance of a pressure test using a conduit incorporated in a flaring die is a very effective step as it allows the pressure test to be performed immediately after flaring.

It also ensures that the nozzle forms an excellent seal against the inner surface of liner to ensure integrity of the pressure test. Thus, the invention achieves both excellent quality with improved efficiency.

In one embodiment, the flaring step is performed by an apparatus which comprises a pair of opposed workstations and liner flaring is performed simultaneously at both ends. By performing the flaring operation simultaneously at both ends, the productivity is significantly improved.

In one embodiment, one workstation pumps pressurised fluid into the pipe, and the other workstation controls exit at the other pipe end to regulate pressure. This is an easily operated pressure regulation arrangement.

Preferably, the test is performed with the flaring die remaining in place after the flaring operation. This allows the pressure test to be performed without delay, and it also ensures that the seal between the conduit and the inner surface of the liner is excellent. The test may be a pulsating test.

In another embodiment, the flaring operation is performed in two stages, namely an initial flaring stage with a heated die and a final flaring stage with a die conforming to the final liner flare shape. This is an effective way of ensuring that the liner is not damaged at the flare.

In another embodiment, the temperature of the heated die is such as to allow the final flaring die operate at ambient temperature. It has been found that by heating the initial die to this level, operation of this die is very effective, and then there is no need to heat the second die, which may act very quickly to bring the flare to its final shape. This is achieved because of the residual heat in the flare brought about by the temperature level of the initial die.

Preferably, the final flaring die comprises the fluid conduit.

In one embodiment, the pipe is flared at its ends before insertion of the liner by operation of an eccentrically-rotating forming die. This step minimises the chance of burrs arising in the surface of the pipe, which could damage the liner. It is also a very efficient use of material.

In one embodiment, the liner is pre-stretched, and it is relaxed by heating after insertion in the pipe. This is a simple way of ensuring that the liner has an interference fit within the pipe. It is quite easy to insert the liner into the pipe and the liner's relaxation ensures that there is an interference fit.

According to another aspect of the invention, there is provided a pipe liner flare-forming apparatus comprising:-
a flare-forming die and a drive to press the die against excess liner protruding from a pipe end to form a liner flare; and
a test means comprising a conduit in the die and means for pumping fluid through the die conduit and into the pipe to perform a pressure test on the pipe.

In one embodiment, the apparatus comprises a pair of opposed workstations each having a die with a conduit, and a drive, whereby a flare is simultaneously formed at each end of the pipe.

Preferably, the workstations are mounted on rails and the apparatus comprises means for conveying a workstation on the rails to a desired position accortding to the length of the pipe.

In one embodiment, each workstation comprises means for clamping a pipe end during flaring and testing.
In another embodiment, the fluid is a liquid and the rails are mounted over a liquid sump, and the pressure test pump means comprises means for drawing liquid from the sump to recirculate it.

In one embodiment, one workstation comprises pressure test pump means and the other workstation comprises valve means to control flow of fluid from the pipe.

The invention will be more dearly understood from the following description of some embodiments thereof, given by way of example only with reference to the accompanying drawings, in which:-
Fig. 1 is a diagrammatic flow chart illustrating a production method of the invention;
Figs. 2 and 3 are diagrams illustrating pipe flaring;
Fig. 4 is a perspective view of a pipe after its ends have been flared,
Fig. 5 is cross-sectional diagram illustrating insertion of a liner;
Fig. 6 is a cross-sectional diagram illustrating heating of the liner until it forms an interference fit within the pipe;
Fig. 7 is a perspective view of a pipe after the liner has been inserted;
Fig. 8 is a front view of a flare-forming apparatus used in the method;
Fig. 9 is a side-view showing a workstation of the apparatus;
Fig. 10 is a front view showing an initial head of the workstation;
Figs. 11 and 12 are diagrams illustrating a flare being formed in a liner;
Fig. 13 is a diagram illustrating a pressure test; and
Fig. 14 is a perspective view of an end-product lined pipe.

Referring to the drawings, there is shown a method 1 for producing a lined steel pipe. Mild steel pipe tubing is stored in step 2 and is sawn in step 3 to the desired length for a lined pipe. In step 4, the ends of the pipe are flared, as described in more detail below. Weld deposits are welded onto the pipe near the ends to retain flange collars, which were previously pushed over the pipe before the second flare was formed. In step 6, vent holes are drilled in the pipe and the pipe is sand-blasted to remove burrs. A primer coating is applied to the flared end of the pipe in step 7. Liners are stored in step 8 and are inserted into the pipe in step 9 so that excess liner protrudes from each end. Pipes with liners inserted in them are mounted on a bogie and are transferred to an oven and are heated in step 10 so that the liners (which were pre-stretched) relax and expand out to form an interference fit within the pipes. In step 11, the excess liner at each end is measured and waste is cut off so that the excess liner has a correct length. In step 12, a flare-forming apparatus is used to form flares using the excess liner at each end and to also perform a pressure test. The lined pipe is then coated in step 13 and is blanked off in step 14 before dispatch.

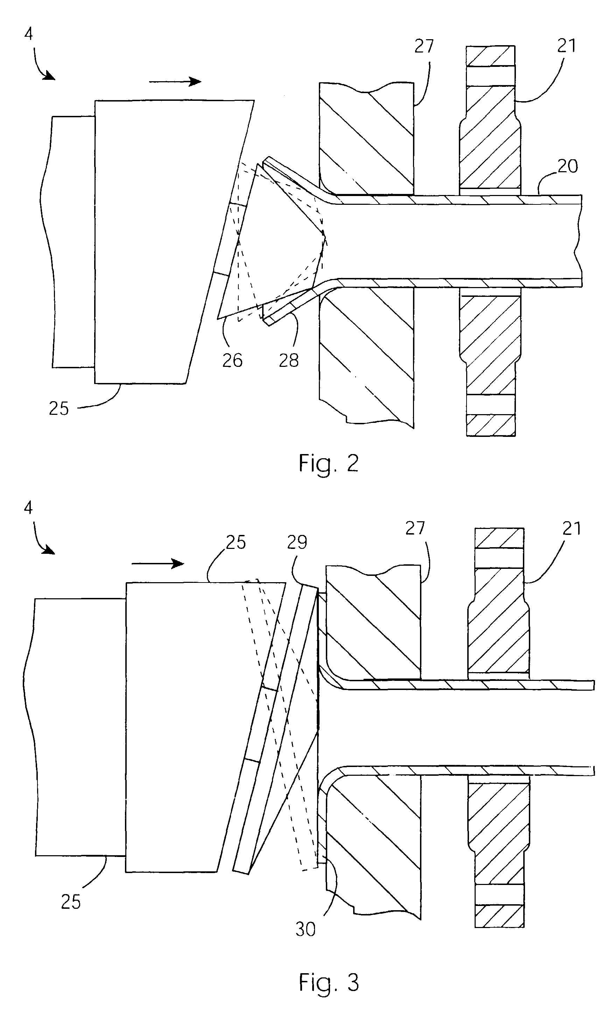

In more detail, the pipe flare-forming operations are shown in Figs. 2 and 3. The pipe is indicated by the numeral 20 and it has a flange collar 21 at each end. A flare-forming head 25 moves an initial flare-forming die 26 which is rotated eccentrically as the pipe is clamped by a clamp 27. The pipe end is flared to an initial stage 28. Subsequently, the head 25 rotates a final flaring die 29 to complete the flaring operation until the pipe forms a flare 30, shown in Fig. 3.

The result is that the flare 30 is at right angles to the axial direction. The flare is formed with smooth surfaces, which minimises the chance of the liner being damaged. This method also involves efficient utilisation of materials and labour. For example, there is no need to weld and subsequently de-burr a flange onto the end of the pipe to form the flare.

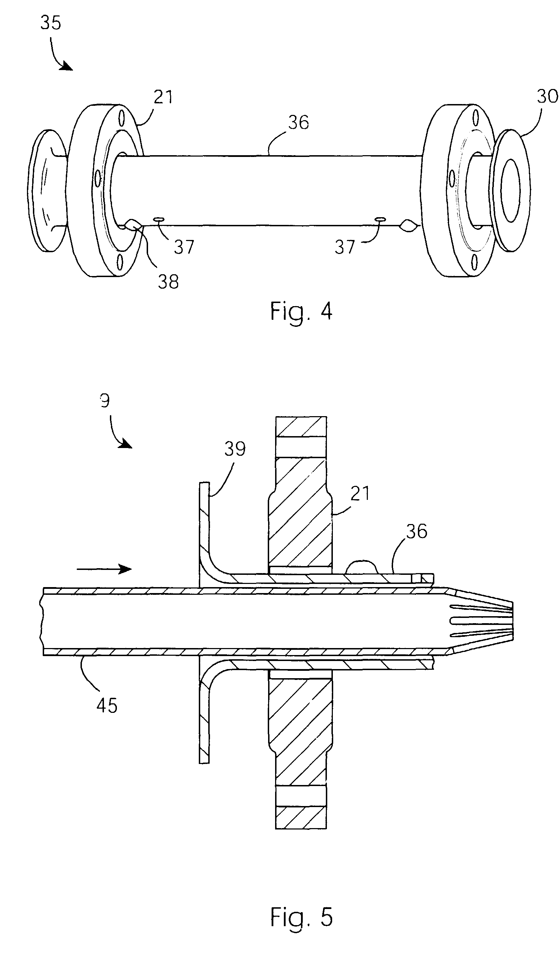

The flared pipe is shown is Fig. 4. The tubular section is indicated by the numeral 36 and the pipe has vent holes 37, and weld deposits 38 which retain the flange collars 21 at the ends. The flange collars 21 will not be secured in place until the pipe is installed by the end-user.

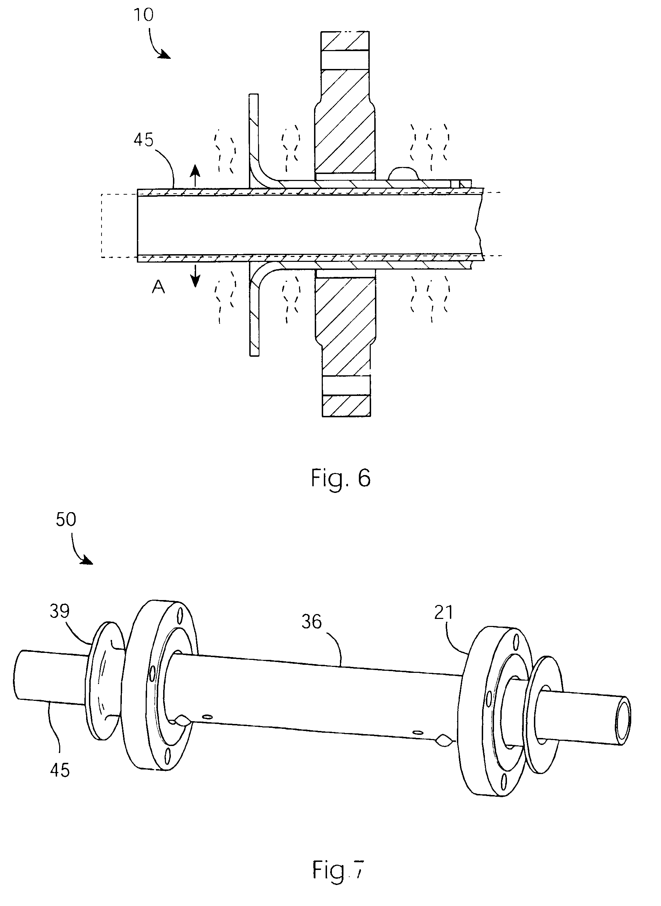

The step 9 of inserting a liner is illustrated in Fig. 5. A liner 45 is simply pushed through the pipe section 36. The liner 45 is pre-stretched so that there is a small gap between the outside diameter of the liner and the inside diameter of the tubular section 36. This gap is filled, as shown in Fig. 6, by heating the assembly in an oven until the liner relaxes by contacting in length and expanding in diameter until it has an interference fit within the pipe.

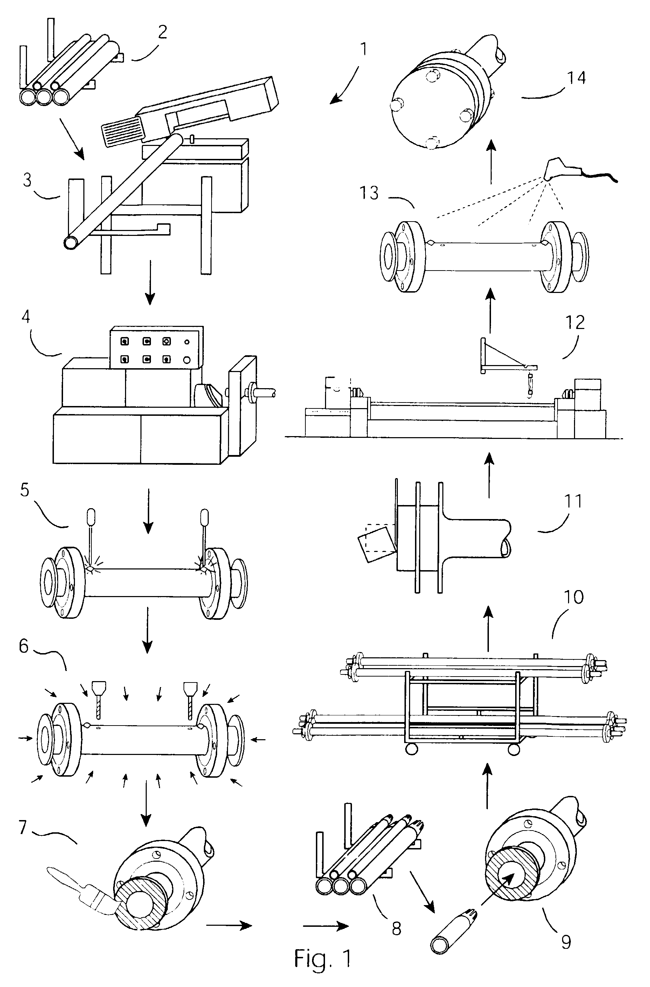

As shown in Fig. 1, any unwanted length of excess liner is cut off in step 11, to provide an assembled pipe 50 shown in Fig. 7.

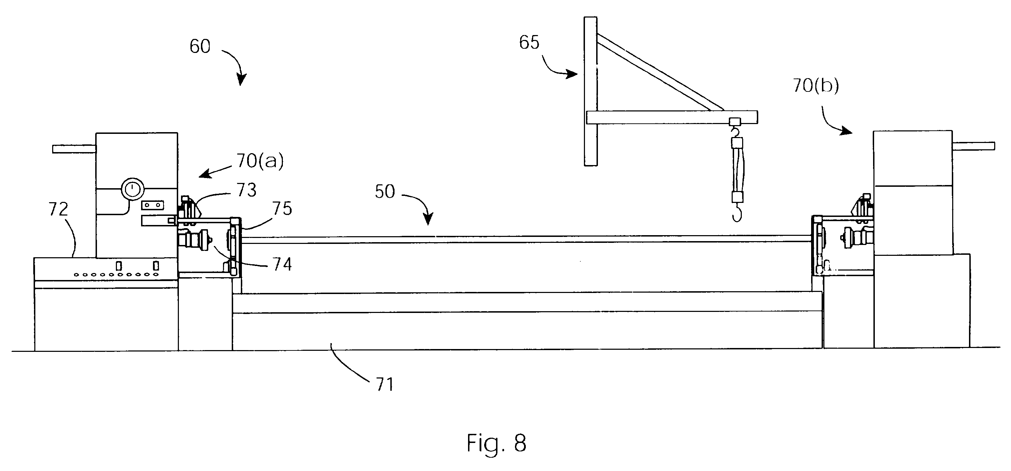

Referring now to Fig. 8, an apparatus 60 for flaring excess liner at each end is shown. The apparatus 60 comprises a crane 65 for lifting the assembled pipes 50 into position between workstations 70(a) and 70(b). The workstations slide on rails over a bed 71 which incorporates a water sump. A controller 72 controls the workstations 70. Each workstation comprises an initial head 73 and a final head 74 for performing various operations on the pipe assembly 50. Also, each workstation 70 comprises a pipe clamp 75 which clamps the pipe 50 at its ends.

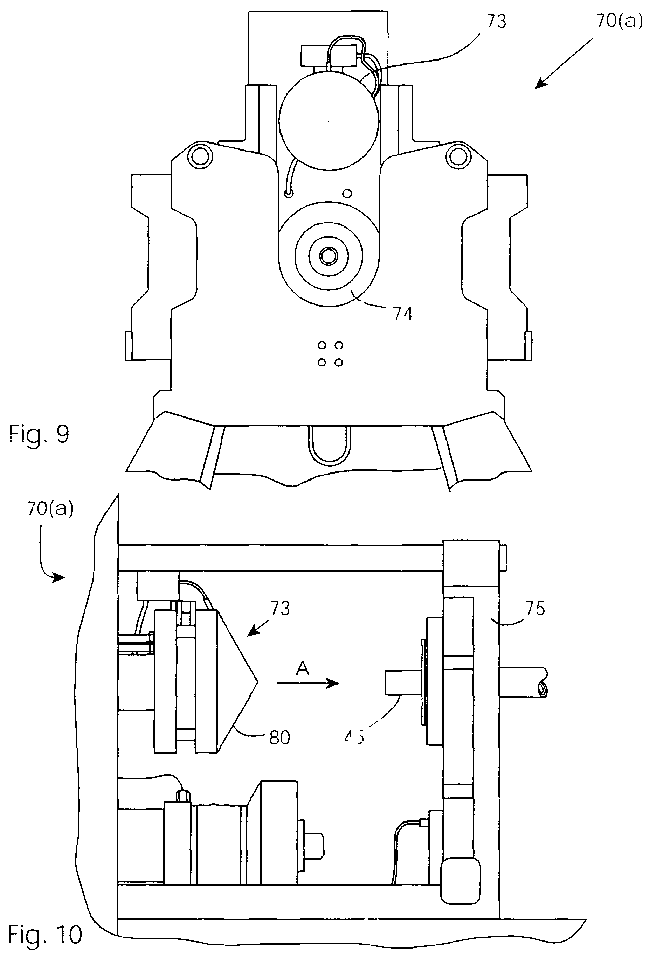

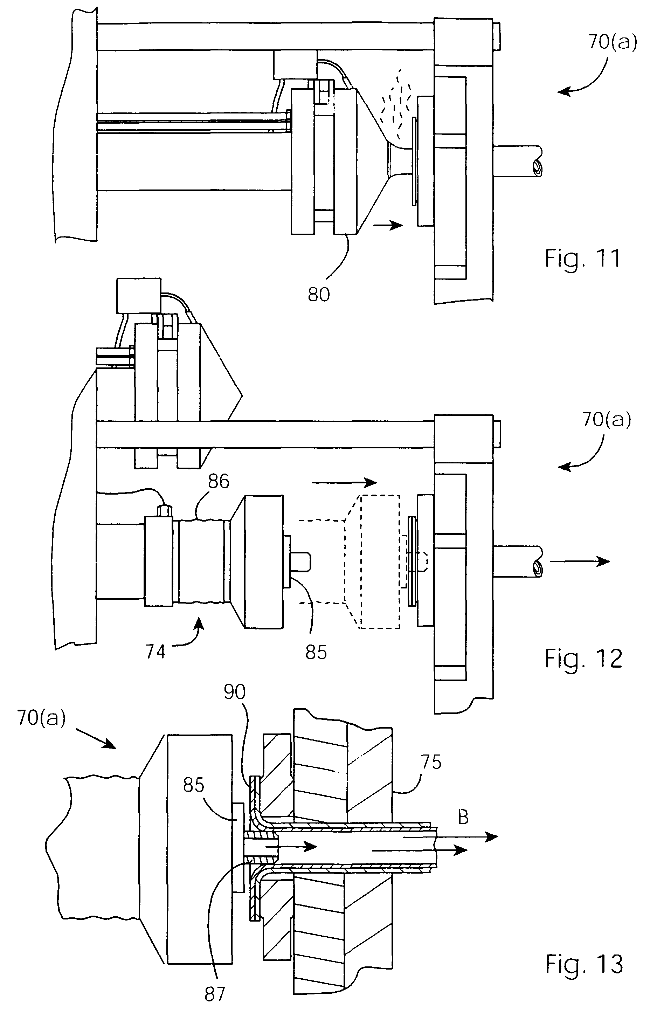

As illustrated in Figs. 9 to 13, the initial head 73 is co-axial with the pipe 50 and is moved in the axial direction as indicated by the arrow A in Fig. 10. The head 73 has a conical heated die 80 which in this embodiment is heated to a temperature in the range of 300°C to 400°C depending on the liner material. As shown in Fig. 11, the die 80 progressively forms a flare in the excess liner by a combination of pressure and heat. This action progresses until an intermediate flare is formed as shown in Fig. 11. Immediately after this, the final head 74 is moved upwards into registry with the pipe assembly 50. The final head 74 supports a final flaring die 85 which has a shape corresponding to that of the desired liner flare. The die 85 is not heated, and is therefore at ambient temperature. However, the residual heat in the excess liner allows the die 85 to push the liner into the final flare shape, which is at a right angles to the axial direction. This action proceeds until the excess liner forms a flare 90 as shown in Fig. 13.

When the die 85 has moved to the final position, the final head 74 starts to perform a pressure test. The die 85 is of cylindrical construction and incorporates a conduit 87 which communicates with a conduit within the head 74. This is in turn connected to a high-power water pump which pumps water through the conduits and into the liner. This action has the added advantage of cooling the final head 74 at the same time as testing.

At the same time as the initial and final flaring operations are being performed on the liner at this end, the opposite workstation 70(b) is simultaneously performing the same operations at the other end of the pipe assembly 50. When the stage is reached to start the pressure test, the water is pumped into the liner via the conduit 87 at the workstation 70(a), while at the other workstation 70(b) the conduit 87 is used to vent air so that the liner may be filled with water. After venting, control valves are closed so that the other end of the pipe is effectively sealed and pressure builds up within the pipe. The pressure is built up to that required for testing regulations for the particular gauge of pipe being produced. The pressure is maintained for a required time period, after which the valves are opened and the water flows out of the pipe and into a sump in the bed 71 of the apparatus 60. This water is then available for re-circulation during the next test.

Because the pressure test is performed with the final flaring dies 85 *in-situ*, there is an excellent seal around the inside surface of the liner at each end. This helps to ensure effectiveness and integrity of the pressure test.

Also, the test is performed very efficiently because it is performed immediately after the flares are formed, without even a delay which would be required for movement of another head into position. Thus, a combination of the facts that the flares are formed at opposite ends of the pipe simultaneously, and the pressure test is carried out with the final flaring dies *in-situ* ensures that productivity is dramatically improved as compared to prior processes. In addition it has been found that 100% testing is viable, which is a considerable improvement over the prior art.

These improvements in efficiency have been achieved without adversely affecting either quality or production versatility. The bed 71 allows movement of the workstations 70 to accommodate pipes of widely varying lengths without changing the flaring or testing processes. The bed 71 of course also provides for re-circulation of the water back to pumping workstation 70. This is a very effective arrangement.

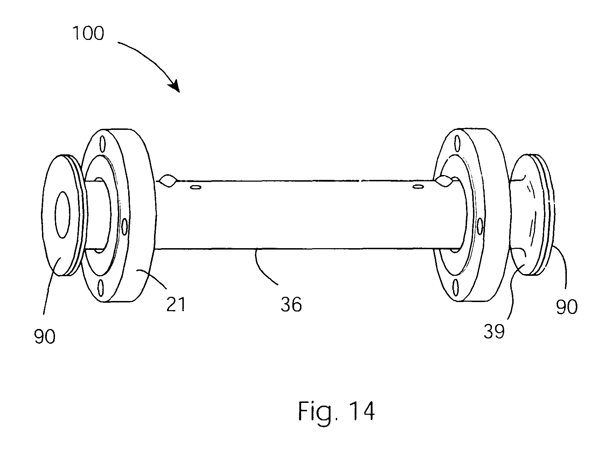

A final end-product lined pipe 100 is shown in Fig. 14.

It will be appreciated that the invention provides for production of a lined pipe in a very efficient manner, without sacrificing quality. This is a very important point because the quality achieved by the prior Fordbrook process was excellent and it was essential that an improvement in production efficiency did not involve sacrificing quality. There is a dramatic improvement in efficiency because of both the simultaneous operations at each end and the immediate pressure test. It has also been found that the integrity of the pressure tests is excellent.

The invention is not limited to the embodiments described, but may be varied in construction and detail within the scope of the claims.

## Claims

1. A method of lining a metal pipe comprising the steps of:-
inserting a liner (45) into a pipe (20) until excess liner protrudes from at least one end of the pipe; and
forming a flare in the excess liner by pressing a flaring die against the liner,
characterised in that,
the die (85) comprises a fluid conduit (87), and the pipe is tested after flaring of the liner by injecting fluid under pressure into the liner via the conduit (87).

2. A method as claimed in claim 1, wherein the flaring step is performed by an apparatus which comprises a pair of opposed workstations (70(a), 70(b)), and liner flaring is performed simultaneously at both ends of the pipe by a workstation at each end.

3. A method as claimed in claim 2, wherein one workstation (70(a) pumps pressurised fluid into the pipe, and the other workstation (70(b) controls exit at the other pipe end to regulate pressure.

4. A method as claimed in any preceding claim, wherein the test is performed with the flaring die (85) remaining in place after the flaring operation.

5. A method as claimed in any preceding claim, wherein the flaring operation is performed in two stages, namely an initial flaring stage with a heated die (73) and a final flaring stage with a die (85) conforming to the final liner flare shape.

6. A method as claimed in claim 5, wherein the temperature of the heated die is such as to allow the final flaring die operate at ambient temperature.

7. A method as claimed in claims 5 or 6, wherein the final flaring die comprises the fluid conduit.

8. A method as claimed in any preceding claim, wherein the pipe is flared at its ends before insertion of the liner by operation of an eccentrically-rotating forming die (26,29).

9. A method as claimed in any preceding claim, wherein the liner is pre-stretched, and it is relaxed by heating after insertion in the pipe.

10. A pipe liner flare-forming apparatus comprising:-
a flare-forming die (80, 85), and a drive to press the die against excess liner protruding from a pipe end to form a liner flare; and
test means comprising a conduit in the die (85), and means for pumping fluid through the die conduit (87) and into the pipe to perform a pressure test on the pipe.

11. An apparatus as claimed in claim 10, comprising a pair of opposed workstations (70(a), (70(b)), each having a die (85) with a conduit, and a drive, whereby a flare is simultaneously formed a each end of the pipe.

12. An apparatus as claimed in claim 11, wherein the workstations are mounted on rails and the apparatus comprises means for conveying a workstation on the rails to a desired position according to the length of the pipe.

13. An apparatus as claimed in claim 12, wherein each workstation comprises means (75) for clamping a pipe end during flaring and testing.

14. An apparatus as claimed in any of claims 11 to 13, wherein one workstation (70(a)) comprises pressure test pump means and the other workstation (70(b)) comprises valve means to control flow of fluid from the pipe.

15. An apparatus as claimed in claim 14, wherein the fluid is a liquid and the rails are mounted over a liquid sump (71) and the pressure test pump means comprises means for drawing liquid from the sump to re-circulate it.

16. A lined pipe whenever produced by a method as claimed in any of claims 1 to 9 and 15.
